# EUROPEAN PATENT APPLICATION

(11) **EP 3 015 815 A1**
(43) Date of publication of application: **04.05.2016**
(21) Application number: 14425139.4
(22) Date of filing: 31.10.2014
(51) Int. Cl.: G01B 7/16, G01B 21/32

(54) **Device for measurement of strain in flexible structural elements**

(71) Applicant: Agisco S.r.l., 20124 Milano (IT)
(72) Inventor: Robotti, Franco, 20090 Segrate (MI) (IT); Rossi, Leonardo, 13818 Tollegno (Biella) (IT)
(74) Representative: Zizzari, Massimo

(57) **Abstract**

Device for measurement of strain (1) in flexible structural elements subjected to traction, particulary suitable for detect the deformation state of inaccessible structural elements, comprising:
- an opportunely shaped extensible part (2), that develops lengthwise;
- a monolithic part (3), that is centrally located and less deformable than extensible part (2);
- an extensometric circuit (8) located on the central monolithic part (3) so that when the device (1) is put into traction, the extensible part (2) stretches and stresses the central monolithic part (3). This central part (3) provides the reading of the deformation's entity through an extensometer circuit (8).

## Description

The present invention is related to a device for measurement of strain in flexible structural elements subjected to traction.

The device is particulary suitable to detect the deformation state of inaccessible structural elements such as the frame of reinforced earth, the rockfall protection, the *strips* to support the reinforced earth. Nowadays rockfall protection and support structures in reinforced earth are used in very different fields, such as: road and rail embankments, retaining walls of roads and highways, consolidation of collapsed soil, rockfall protection, ground retainig or terracing at the mount of tunnel, embankments of canals and rivers, retaining walls.

The necessity to have these measures is very important in order to monitor the status of reinforced earth's activity from the deformation of metal meshes; the security level of rockfall protection, after the deformation's evaluation of the cages; the evolution in time of the walls' stress in case of the support *strips.*

Since the traction corresponds to a very high deformation, for extremely flexible elements, for which the extension is in the order of 2% or even higher, the determination of the working stress state is very difficult to investigate, especially if they aren't accessible during their working life.

Generally, it is known that each body, subjected to a stress, deforms proportionally to the applied stress and to the constituent material. Generally a deformation is called elastic if it disappears when the stress stops, plastic otherwise. There are materials that have only plastic deformation, and materials that have an elastic behavior until a certain stress value, then they have a plastic deformation until they collapse.

The most common method for evaluating the stress state of a structure to be monitored is to detect the known stress state of a reference frame, connected to it. In this way deformation and stress can be correlated.

The device function provides that, when it is applied to the structural component to be minitored and it is put into traction, it stretches lengthwise and stresses the central monolitic part. This central part provides the reading of the ongoing deformation's entity through an extensometer circuit.

In this way deformation and stress can be correlated through calibration tests, that will be worth for the working life of the structural component to be monitored.

From the state of the art some known devices are available, serving as cells of deformation and load.

Patent US3866157 A discloses a load cell with a triangular cross section, when it is subjected to a traction stress it deforms; mechanical-electrical transducers are mounted on the faces of the ring shaped element in order to transform deformation into an electrical value.

Patent US4763740 A concerns a load cell that includes a body formed from a single block of material which has various openings, so the whole block can distort when a load is applied at one end. This distortion is measured by strain gauges mounted within the body of the block with the strain gauges arranged in conjunction with a bridge circuit, so that they provide an output proportional to the load applied.

Patent US6684949 B1 discloses a load cell system with a strain gauge and a circuitry connected to this cell; the circuitry comprises a non-volatile memory acting to store load cell calibration data.

Patent DE202010016810 U1 discloses a system for measuring earth movements, particulary for monitoring of man-made or natural slopes. It's characterized by a variable length PVC pipe introduced in the area to be measured; on the inner wall of the pipe sensor modules are mounted, they are connected to an electric control unit to transmit data to the outside via wireless, radio or GPRS.

Patent WO2013007917 A1 relates to a method of representing possible moviments of a structure to be monitored, such as a building, a bridge, a dam, an embankment. The invention comprises: a device for movements measuring, a device for receiving data and an image taking device.

All the above known solutions involve a certain number of drawbacks, first of all the fact that load cells always have a relevant thickness, which affects the stiffness of the structural component to be monitored and the data precision.

All these problems are overcome by this invention, which main goal is the measurement of strain in flexible structural elements subjected to traction; the device is particulary suitable for detect the deformation state of inaccessible structural elements, such as the frame of reinforced earth, rockfall protection, the *strips* to support the reinforced earth.

Another objective is that the device must have a complex shape characterized by meatuses acting as leaf springs, so that there is a significant total deformation and the device stays in elastic range. Plastic range can be achieved in systems in which deformation and stress are possible in only one direction, and in systems with a little pulsating load. Particularly, in mechanical field it is defines *"leaf spring"* that type of spring characterized by metallic foils overlapping each other, it reacts to the applied load with an inflection in its longitudinal plane. Elasticity in a wide field of application and a remarkable resistance to the pulsating loads are the characteristics of this type of spring.

A further objective consists in the extreme thinness of the device, characterized by a thin metallic foil with a extensometer circuit.

Another objective consists in the low influence of the device on the stiffness of the structural component to be monitored; this determines a higher precision of measurement.

Another goal of the invention consists in that all the data, coming from the extensometers, are acquired and processed in real time by an electronic control circuit, so that the deformation outline of the entire structure can be reconstructed, in respect to a specific reference outline, and the same data are solved and transmitted, in real time, to a remote control unit.

Therefore, it is specific subject of the present invention a device for measurement of strain in flexible structural elements subjected to traction, particulary suitable for detect the deformation state of inaccessible structural elements, comprising:
- an opportunely shaped extensible part, that develops lengthwise;
- a monolithic part, that is centrally located and less deformable than said extensible part;
- an extensometric circuit located on the central monolithic part
so that when the device is put into traction, the extensible part stretches and stresses the central monolithic part. Said central part provides the reading of the deformation's entity through an extensometer circuit.

Compared to known devices, the present invention offers further advantages, because it guarantees a high accuracy of measurement, a low cost due to use of standard components, the use of modular parts so that they can be assembled from the basic components.

This invention is now being described for illustrative but non-limiting purposes, with particular reference to figures of the enclosed drawings, where:
figure 1 is a front view of a device for measurement of strain in flexible structural elements subjected to traction;
figure 2 is a lateral view of the same measurement device of figure 1;
figure 3 is a frontal view of the same measurement device of figure 1, fixed to a polymeric *strip;*
figure 4 is a lateral view of the same measurement device of figure 1, fixed to the same polymeric *strip* of figure 3;
figure 5 is a perspective view of the extensible part of the same measurement device of figure 1;
figure 6 is a view of an experimental test graph;
figure 7 shows a block diagram of the electronic components performing the transmission process for measurement data.

It is here underlined that only few of the many conceivable embodiments of the present invention are described, which are just some specific non-limiting examples, having the possibility to describe many other embodiments based on the disclosed technical solutions of the present invention. In different figures, the same elements will be indicated with the same reference numbers.

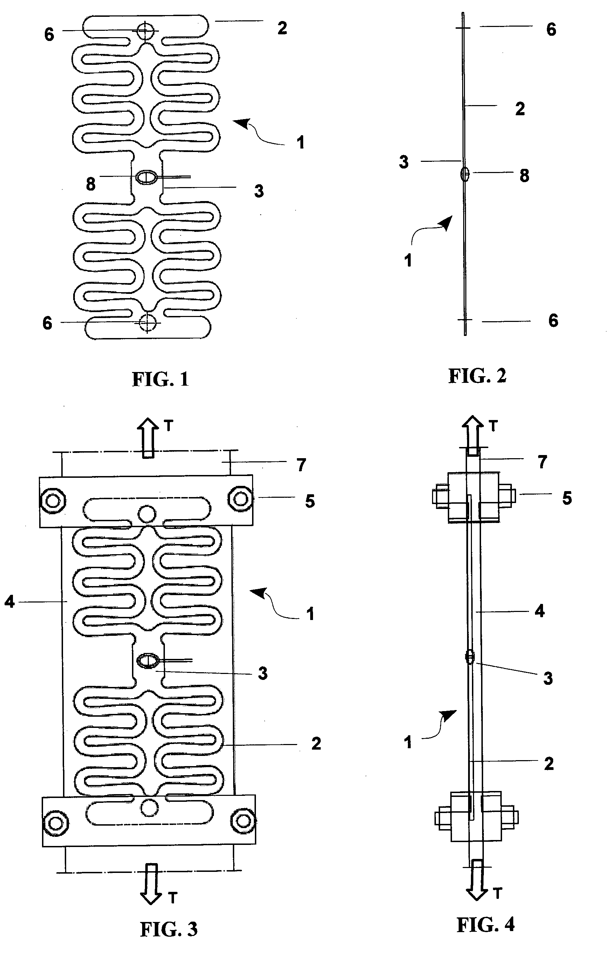

Figures 1 and 2 show a device for measurement of strain in flexible structural elements subjected to traction also called *"load cell"* (literally it is a device able to transform a mechanical force into a measurable and recordable electrical signal), it is similar to a rectangular plate having a dimension prevalent over the others. It is composed of an extensible part 2 and a monolithic central part 3, that is centrally located and it is less deformable than the extensible part 2. The extensible part 2 develops lengthwise and is characterized by a suitably shaped thin metallic foil, characterized by meatuses acting as leaf springs. They are designed so that there is a significant total lengthwise deformation, with a low tensile stress, so that the device 1 stays in elastic range. At the both ends, the device 1 has two holes 6, so that when it is put into traction, it stretches and stresses the central monolitic part 3. The deformation, caused by the tensile stress acting on the device 1, is measured by an extensometer circuit 8; it is a sensor constituted by thin sheets of plastic material. It is glued to the monolithic part 3, on the central part of the device 1 and, when it is subjected to a tensile stress, the transmitted deformation generates a variation of electric resistance, that is proportional to the deformation. When the extensometer circuit 8 is connected to the monolithic part 3, the two sides are united and are subject to the same deformation. Moreover, if the resistive surface of the extensometer circuit 8 is stretched, the resistance increases with a value that is proportional to the applied deformation, otherwise the resistance is reduced. The resistance variation is measured by a Wheatstone bridge, a system that converts the resistance variation in a voltage variation.

Figures 3 and 4 show the same device 1 that is fixed to a polymeric *strip* 4, subjected to a traction force T which acts lengthwise, parallelly to the device's axis 1. The device 1 is fixed to the polymeric *strip* 4; the polymeric *strip* 4 is applied to a structure to be monitored 7 through an appropriate fixing system 5, characterized by bolted joints. To measure the effort supported by the *strips* 4, that are bound to the structure to be monitored 7, in certain characteristic points, the modules of the device 1 are hooked in parallel to the *strips* 4, so that the extensible part 2, subjected to a tensile stress, stretches elastically and stresses the central monolithic part 3, that is placed in the central part of the device 1. The deformation caused by the tensile stress acting on the device 1, is measured by an extensometer circuit 8, which allows to determine the deformation's entity.

Furthermore, device 1 houses an electronic equipment, placed at each single module, that is connected by a transmission cable to a remote control unit, which is in charge of data exchange and power supply to/from external units. The remote control unit can be fixed to inground structure and be connected to the surface by a cable running up along the structure (not shown in figure).

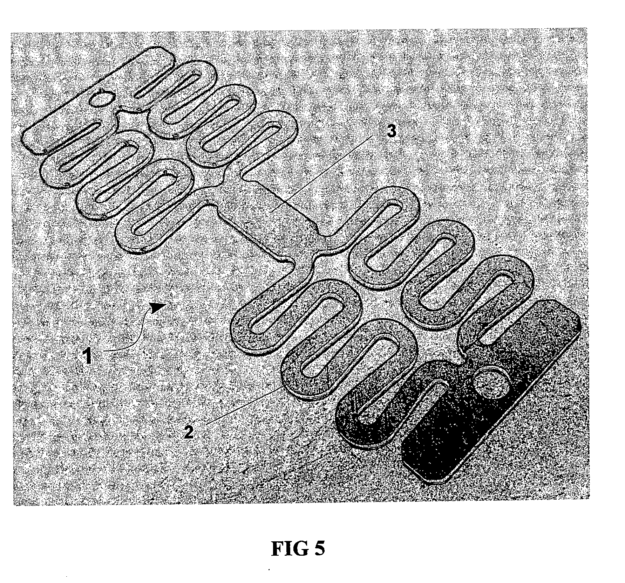

Figure 5 is a perspective view of the device 1. It presents as a parallelepiped shape, with a dimension that prevails respect to the others, having a total length equal to 195 mm, a width equal to 60 mm and a thickness equal to 1.5mm; in particular it consists of a thin metal foil, made of Fe 510 certificate steel. Considering the high elasticity modulus of the used material, the extensible part 2 has a complex shape, suitable to realize more elastic deformations as possible. For this reason extensible part 2 consists of a thin metallic foil characterized by meatuses acting as leaf springs and it is more deformable than the monolithic part 3. In mechanics, with the term *"leaf spring"* refers to that type of spring that is constituted by metal foils overlapping each other, which reacts to the applied load with an inflection in the longitudinal plane; it has stiffness in a wide field of use; in particular it is a flexing spring, schematized as a simply supported beam with a rectangular section.

The above said device 1 is fixed to a polymeric *strip* 4. The *strips* 4 are generally placed one beside the other, in correspondence of the embankments of bridges and viaducts, to give continuity to the road platforms; they are a real reinforcement and containment system and they prevent the pressure of the earth causing the collapse of the structure. First of all, they are emplaced and are fixed to a reinforced concrete wall, then they are covered with earth. In particular, the modules of the device 1 are fixed to said *strips* 4, in correspondence of characteristic points of the structure 7 to be monitored, according to a grid configuration and arranged as elements of a matrix, so that it is possible to measure, by means of the extensometer circuit 8, the voltage that acts on them, and it is possible to extract information relating to the behavior of the entire structure, during its working life, and to reconstruct a deformation outline of the entire structure, with respect to a reference outline.

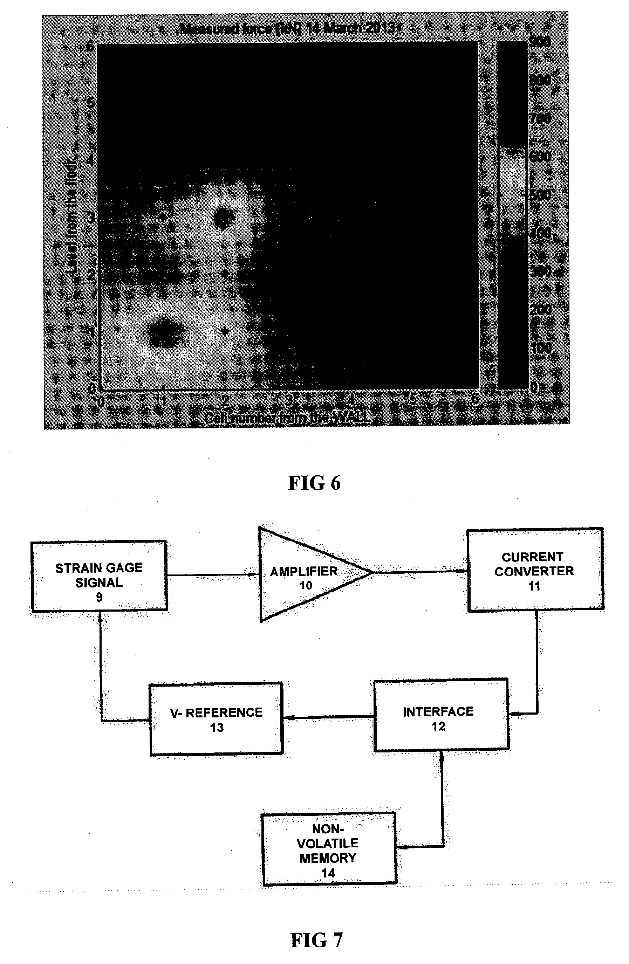

Figure 6 shows an experimental test graph; it represents the solicitation of a series of modules of the device 1 in a section of a reinforced concrete wall, as a function of the laying surface of the embankment. It can be deduced, rightly, as the *strap* 4, placed at the bottom, is the most stressed, since all the superstructure insists on it.

Figure 7 shows a block diagram of the electronic components performing the transmission process for measurement data.

Device 1 houses an electronic equipment, placed at each single module, that is connected by a transmission cable to a remote control unit, which is in charge of data exchange and power supply to/from external units.

More precisely, the strain gauge signals 9 are amplified by passing through an amplifier 10 before passing through a current converter 11, which converts the voltage into electric current. An interface circuit 12, that connects the sensor system and the power system, powers a V-reference 13, that provides a constant voltage value which is valid for the measurement of the deformation in progress.

The device 1 also comprises a non-volatile memory 14 (literally that type of memory that can store information even if it is not powered) adapted to store the calibration data of the extensometer circuit so as to ensure the data preservation even in temporary absence of power; data can be transferred to a *personal computer,* to a *tablet PC,* or to any other apparatus with a single processor or multiprocessor, at a later time, so that this apparatus should not be present during the entire process of data collect.

This invention involves many different achievements depending on the technical and project parameters aiming at a specific final application. As a general reference, the monitoring of the structure 7 provides that the single modules of the device 1 are assembled in parallel and fixed to the *strips* 4 through the two holes 6, placed at the ends, so that the device 1, subjected to a tensile stress, stretches lengthwise and the extensometer circuit 8 measures the deformation. The assembly in parallel of the individual modules of the device 1 provides an additional benefit for the accuracy of the measurements and ensures the continuity of the *strips* 4, without weakening the reinforcement structure.

A different achievement of this invention provides that the single modules of the device 1 are assembled in series; in this way there are problems related to the locking of the individual modules of the device 1 to the *strips* 4, this causes the weakening of the structure due to the interruption of the *strips* 4, with less precision of the measurement. The invention's protection is related to both the solutions.

After description of above examples there is evidence to say that this invention achieves all its goals. In particular it allows to acieve a device for measurement of strain in flexible structural elements subjected to traction, particulary suitable for detect the deformation state of inaccessible structural elements such as the frame of reinforced earth, rockfall protection, the *strips* to support the reinforced earth.

Furthermore, the same device has a complex shape, characterized by meatuses acting as leaf springs, so that there is a significant total deformation and the device stays in elastic range.

The same invention is characterized by the extreme thinness of the device, that involves no influence on the local characteristics of the structural component to be monitored; this determines a higher precision of measurement.

Furthermore, the device has a complex shape that involves a low influence on the stiffness of the structural component to be monitored.

In addition, the device function provides that, when it is applied to the structural component to be monitored and it is put into traction, by pulling the two holes located at both ends, it stretches and stresses the central monolitic part. This central part provides the reading of the deformation's entity through a extensometer circuit.

Finally, the same invention provides that all the data, coming from the extensometers, are acquired and processed in real time by an electronic control circuit, so that the deformation outline of the entire structure can be reconstructed, in respect to a specific reference outline, and the same data are solved and transmitted, in real time, to a remote control unit.

This invention is described for illustrative but not limitative purposes, following some preferred achievements; however it goes without saying that modifications and/or changes would be introduced without departing from the relevant scope, as defined in the enclosed claims.

## Claims

1. Device for measurement of strain (1) in flexible structural elements subjected to traction, particulary suitable for detect the deformation state of inaccessible structural elements, comprising:
- an opportunely shaped extensible part (2), that develops lengthwise;
- a monolithic part (3), that is centrally located and less deformable than extensible part;
- an extensometric circuit (8) located on the central monolithic part (3) so that when the device (1) is put into traction, the extensible part (2) stretches and stresses the central monolithic part (3); this central part (2) provides the reading of the deformation's entity through an extensometer circuit (8).

2. Device for measurement of strain (1) in flexible structural elements subjected to traction, particulary suitable for detect the deformation state of inaccessible structural elements, according to the previous claim, **characterized by** the fact that:
- the extensible part (2) is **characterized by** a suitably shaped thin metallic foil, so that the extreme thinness of the device (1) involves no influence on the local characteristics of the structural component to be monitored.

3. Device for measurement of strain (1) in flexible structural elements subjected to traction, particulary suitable for detect the deformation state of inaccessible structural elements, according to one or more of previous claims, **characterized by** the fact that:
- the extensible part (2) has a complex shape, **characterized by** meatuses acting as leaf springs, suitable to realize more elastic deformations as possible,
so that there is a significant total deformation, with a low tensile stress and the device stays in elastic range. Plastic range can be achieved in systems in which deformation and stress are possible in only one direction, and in systems with a little pulsating load.

4. Device for measurement of strain (1) in flexible structural elements subjected to traction, particulary suitable for detect the deformation state of inaccessible structural elements, according to one or more of previous claims, **characterized by** the fact that:
- two holes (6) are made at the ends of the extensible part (2),
- said extensible part (2) is applied to a polymeric *strip* (4), made of plastic material, which is fixed to the structure (7) to be monitored by means a suitable fixing system (5), **characterized by** bolted joints,
so that when the device (1) is fixed to the structure to be monitored (7), through the *strip* (4), and is put into traction by pulling the two holes (6), the extensible part (2) stretches and stresses the central monolitic part (3), which, through the extensometric circuit (8) that is fixed on it, provides the reading of the deformation's entity in progress.

5. Device for measurement of strain (1) in flexible structural elements subjected to traction, particulary suitable for detect the deformation state of inaccessible structural elements, according to one or more of previous claims, **characterized by** including also:
- an electronic control circuit which includes: data acquisition units, being data supplied by above extensometric circuit, computing means for deformation calculation in respect to a reference point, the so called benchmark; storage means for recorded data; and means for data transmission to a remote acquisition unit; so that deformation and stress can be correlated through calibration tests, that will be worth for the working life of the structural component to be monitored.

6. Device for measurement of strain (1) in flexible structural elements subjected to traction, particulary suitable for detect the deformation state of inaccessible structural elements, according to one or more of previous claims, **characterized by** including also:
- an electronic equipment, **characterized by**: an amplifier (10), a current converter (11), an interface circuit (12), a V-reference (13), a non-volatile memory (14),
so that the strain gauge signals (9), coming from the the extensometric circuit (8), are amplified by passing through an amplifier (10) before passing through a current converter (11), which converts the voltage into electric current; an interface circuit (12) powers a V-reference (13), that provides a constant voltage value which is valid for the measurement of the deformation in progress. The non-volatile memory (14) ensures the data preservation even in temporary absence of power; data can be transferred to a *personal computer,* to a *tablet PC,* or to any other apparatus with a single processor or multiprocessor.
